# EUROPÄISCHE PATENTSCHRIFT

(11) **EP 0 512 467 B1**
(45) Veröffentlichungstag und Bekanntmachung des Hinweises auf die Patenterteilung: **29.03.1995**
(21) Anmeldenummer: 92107532.1
(22) Anmeldetag: 04.05.1992
(51) Int. Cl.: B62D 55/088

(54) **Antriebssystem für ein Raupenfahrzeug**
Drive system for a tracked vehicle
Système de propulsion pour véhicule à chenilles

(30) Priorität: 07.05.1991 US 696680
(43) Veröffentlichungstag der Anmeldung: 11.11.1992
(73) Patentinhaber: DEERE & COMPANY, Moline, Illinois 61265 (US)
(72) Erfinder: Brittain, Robert Willis, Dubuque, Iowa 52001 (US); Olson, Charles Dennis, Dubuque, Iowa 52001 (US)
(74) Vertreter: Feldmann, Bernhard

(56) Entgegenhaltungen:
- EP-A- 0 292 281
- WO-A-85/02824
- US-A- 2 338 817
- US-A- 2 592 541
- US-A- 3 068 711
- US-A- 3 472 563

## Beschreibung

Die Erfindung betrifft ein Antriebssystem eines Raupenfahrzeugs gemäß dem Oberbegriff des Patentanspruchs 1.

Konventionelle Raupenfahrzeuge sind gewöhnlich mit Gleisbahnen aus Stahlsegmenten ausgestattet, bei denen Stahlkettenglieder zu einer endlosen Stahlgleiskette zusammengefügt sind. Die Gleisketten werden durch eine Zahntrommel formschlüssig angetrieben, wobei die Zahntrommel über ein Getriebe an einen Verbrennungsmotor angeschlossen ist.

Eine entsprechende Zahntrommel wird durch die US-A-3,068,711 beschrieben. Sie enthält zwei seitlich angeordnete außen gezahnte Scheiben, die durch in Umfangsrichtung zueinander beabstandete speichenförmige Arme miteinander und mit einer Nabe dauerhaft verbunden sind. Die Nabe verjüngt sich in beide axiale Richtungen kegelförmig. Durch diese Ausbildung soll loser Schmutz, der zwischen die Gleiskette und die Zahntrommel gelangt und axial nach innen gepreßt wird, zwischen den Armen durchtreten und von den konischen Flächen der Nabe axial nach außen gedrückt werden, so daß er aus der Zahntrommel herausfällt.

Bereits vor geraumer Zeit wurde vorgeschlagen, endlose Riemengleisbahnen aus elastomerischem Material zu bilden. Derartige Gleisbahnen haben einige Vorteile gegenüber den Stahlgleisketten. Ein solcher Vorteil liegt darin, daß die Riemengleisbahnen es einem Raupenfahrzeug erlauben, über Straßen und Bordsteine zu fahren, ohne diese aufzureißen oder zu beschädigen, wie dies durch die Stahlstollen konventioneller Raupenfahrzeuge geschehen kann.

Jedoch neigen die durch reibenden Eingriff angetriebenen Riemengleisbahnen zum Schlupf zwischen Antriebsrad und Riemen. Um die Normalkraft zwischen Riemen und Antriebsrad zu erhöhen und damit den Schlupf zu vermindern, werden die Riemen unter sehr hohe Zugspannung gesetzt. Jedoch kann Schlupf auch bei erhöhter Zugspannung insbesondere dann auftreten, wenn das Antriebsrad und die Riemengleisbahn mit Schmutz, insbesondere Schlamm, Schlick, Wasser oder anderem schlüpfrigen Material bedeckt sind. Um diese Materialien von dem Antriebsrad und der Riemengleisbahn zu kratzen, können Abstreifer vorgesehen sein. Diese Maßnahme reicht jedoch nicht immer aus. Zur Verminderung des Schlupfes wurde ferner durch die US-A-4,986,377 vorgeschlagen, das Zusatzrad ebenfalls anzutreiben.

Aus der WO-A-85/02 824 geht ein als Traktor ausgebildetes Raupenfahrzeug hervor, bei dem jede der beidseits des Raupenfahrzeuges angeordneten Riemengleisbahnen mit einem Hauptantriebsrad, das im hinteren Bereich des Raupenfahrzeuges angeordnet ist und einem vorderen Zusatzrad in Eingriff steht. Die Riemengleisbahn enthält Führungsnasen, die in einer Reihe längs seiner inneren Umfangsbahn angeordnet sind. Beidseits der Führungsnasen erstrecken sich flache Innenflächen, die mit einer aus einem gummiartigen Überzug bestehenden Umfangsfläche des Haupttreibrades formschlüssig zusammenwirken und dem Antrieb der Riemengleisbahn dienen. Zur Vermeidung eines Schlupfes zwischen Hauptantriebsrad und Riemengleisbahn, der durch Schlamm oder andere Reibungsvermindernde Materialien eintreten kann, sind in die Umfangsfläche des Haupttreibrades quer zur Fahrzeugausrichtung verlaufende, auf den Umfang verteilte Nuten eingelassen. Die Seitenkanten der Nuten sollen Verschmutzungen von der in reibendem Eingiff stehenden Innenfläche der Riemenlaufbahn in die Nuten wischen, von wo aus die Verschmutzungen seitlich austreten sollen. Auch diese Maßnahme ist bei der Schlupfbekämpfung noch nicht immer ausreichend, da der Schmutz nicht zuverlässig aus den Nuten austreten kann und diese zur Verstopfung neigen.

Durch die US-A-3,472,563 ist ein Gleiskettenfahrzeug mit einteilig ausgebildeten Treibrädern der gattungsbildenden Art bekannt geworden. Die Treibräder weisen jeweils eine Nabe auf, die axial ausgerichtete, sich radial nach außen erstreckende plattenartige Speichen trägt. Radial außen ist an jeder Speiche ein sich axial erstreckender, in seinem Querschnitt sich nach radial außen verjüngender Steg angeformt, auf dessen radial äußerer Fläche die Riemenlaufbahn aufliegt. Die Stege sind durch einen mittleren umlaufenden Ring miteinander verbunden. Bei dieser Ausbildung soll der Austritt von Schnee, Eis, Schlamm und dergleichen durch die zwischen den Speichen ausgebildeten Zwischenräume erleichtert werden. Die Querschnittsform der Stege sowie die Ausbildung von geschlossenen Speichen, die sich zwischen der Nabe und den Stegen erstrecken, läßt einen ungehinderten Austritt der Verunreinigungen noch nicht zu. Ferner ist es nachteilig, daß bei einer Beschädigung einzelner Stege das ganze Treibrad ersetzt werden muß.

Die der Erfindung zugrunde liegende Aufgabe wird darin gesehen, ein Antriebssystem der eingangs genannten Art anzugeben, das einen verbesserten Reibungseingriff zwischen dem Antriebsrad und der Riemenlaufbahn auch unter erhöhter Verschmutzung aufweist, wobei der Schmutzaustritt weiter erleichtert wird und bei Beschädigungen ein einfacher Austausch möglich ist.

Die Aufgabe wird ausgehend von den Merkmalen des Oberbegriffs des Patentanspruchs 1 durch dessen kennzeichnende Merkmale gelöst.

Demgemäß wird die in reibendem Eingriff mit der Riemenlaufbahn stehende Umfangsfläche des Treibrades durch eine Vielzahl im wesentlichen parallel zur Treibradachse ausgerichteter, zueinander beabstandeter Reibungseingriffselemente gebildet. Die Reibungseingriffselemente sind lösbar auf der Radnabe des Treibrades befestigt, um einen einfachen Austausch beschädigter Elemente zu ermöglichen. Die radial nach außen weisenden Flächen der Reibungseingriffselemente bilden die mit der Riemenlaufbaun in Eingriff stehende Reibungseingriffsfläche.

Die Reibungseingriffselemente sind vorzugsweise gehärtete Metallteile mit einer rauhen Oberfläche, die einen guten Reibungskoeffizient mit der Riemenlaufbahn gewährleistet. Als bevorzugtes Material für die Reibungseingriffselemente wird spärolithisches Gußeisen mit eingelagertem Wolframkarbid angegeben, wie es beispielsweise in der US-A-4,936,912 beschrieben wurde.

Es hat sich als vorteilhaft erwiesen und wird gemäß einer weiteren Ausgestaltung der Erfindung vorgeschlagen, daß an der Radnabe des Treibrades im wesentlichen parallel zur Treibradachse ausgerichtete, zueinander beabstandete Befestigungsplatten angebracht sind, an denen die Reibungseingriffselemente lösbar befestigt sind. Die Zwischenräume zwischen den Befestigungsplatten überdecken sich mit den Zwischenräumen zwischen den Reibungseingriffselementen, so daß Verschmutzungen ungehindert durch beide Zwischenräume treten können.

Um den Schmutzaustritt zu erleichtern, sind die Befestigungsplatten und Reibungseingriffselemente in ihrem Querschnitt so ausgebildet, daß die Breite der Zwischenräume von der Umfangsfläche aus radial nach innen zunimmt. Zweckmäßigerweise haben die radial äußeren Kanten benachbarter Reibungseingriffselemente und/oder benachbarter Befestigungsplatten einen geringeren Abstand zueinander als ihre radial inneren Kanten. Dabei können die Reibungseingriffselemente und/oder die Befestigungsplatten einen im wesentlichen keilförmigen Querschnitt aufweisen, wobei ihre nach außen weisende Fläche in Umfangsrichtung breiter ist als ihre nach innen weisende Fläche.

Durch die auf dem Umfang verteilten, sich im wesentlichen radial erstreckenden Zwischenräume, die zur Radachse hin offen sind können die Verunreinigungen, die sich zwischen Treibrad und Riemenlaufbahn ansammeln, in Richtung Radachse herausfallen. Die erfindungsgemäße Ausgestaltung hat eine selbstreinigende Wirkung auf die in reibendem Eingriff stehenden Flächen. Schmutz kann sich nicht mehr ansammeln, sondern tritt durch die Zwischenräume ungehindert aus.

Vorzugsweise weist die Riemenlaufbahn zur Zentrierung wenigstens eine in Längsrichtung ausgerichtete Reihe nach innen gerichteter Führungsnasen auf, die in einen Führungskanal in der Umfangsfläche des Treibrades eingreifen und zwischen flachen Innenflächen der Riemenlaufbahn, die dem reibenden Eingriff mit dem Antriebsrad dienen, liegen.

Gemäß einer bevorzugten Weiterbildung der Erfindung enthält das Treibrad eine Radnabe, die aus einem linken Nabenteilstück und einem rechten Nabenteilstück besteht. Beide Nabenteilstücke sind miteinander beispielsweise durch Schrauben verbunden. Zwischen ihnen ist ein umlaufender Führungskanal zur Aufnahme von Führungsnasen der Riemenlaufbahn ausgebildet.

Das linke und das rechte Nabenteilstück weisen vorzugsweise je einen in Achsrichtung inneren und einen äußeren Ringflansch auf. Die beiden zueinander beabstandeten Ringflansche sind durch eine Vielzahl von Befestigungsplatten miteinander verbunden, die im Umfangsbereich der Ringflansche befestigt, beispielsweise festgeschweißt sind. Die Befestigungsplatten sind in Umfangsrichtung zueinander beabstandet und im wesentlichen parallel zur Treibradachse ausgerichtet. Jede Befestigungsplatte enthält zweckmäßigerweise zwei Befestigungslöcher zur Aufnahme von Befestigungsschrauben, mittels derer die Reibungseingriffselemente an den Befestigungsplatten festschraubbar sind.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Seitenansicht eines Raupenfahrzeuges mit einer Riemenlaufbahn aus elastomerischem Material und mit erfindungsgemäßen Antriebsrädern,
- Fig. 2: die perspektivische Darstellung eines Haupttreibrades,
- Fig. 3: die Seitenansicht eines Haupttreibrades und
- Fig. 4: einen Querschnitt durch ein Haupttreibrad entlang der Linie 4 - 4 in Fig. 3.

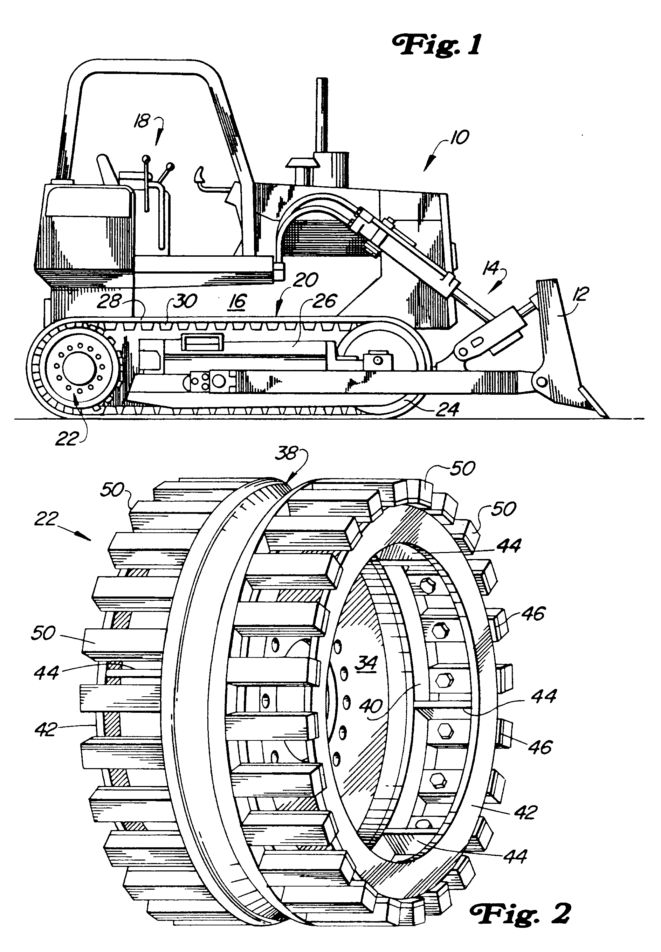

Aus Fig. 1 geht ein Raupenfahrzeug 10 hervor, an dem über Gestänge 14 ein Planierschild 12 befestigt ist. Das Raupenfahrzeug 10 enthält einen Rahmen 16, der eine Verbrennungskraftmaschine und ein Getriebe sowie die Fahrerkabine 18 trägt. Das Raupenfahrzeug 10 wird durch Riemenlaufbahnen 20, auch Gleisbahnen genannt, aus elastischem, gummiartigem Material angetrieben. Es handelt sich um zwei Riemenlaufbahnen 20, die beidseits des Raupenfahrzeuges 10 angeordnet sind und mit zwei hinteren Haupttreibrädern 22 und zwei vorderen Zusatztreibrädern 24 in Eingriff stehen. Die Riemenlaufbahnen 20 werden durch Spannanordnungen 26 gespannt.

Jede Riemenlaufbahn 20 besteht aus einem flachen Bandbereich 28, welcher eine Reihe nach innen gerichteter, zueinander beabstandeter Führungsnasen 30 und nicht dargestellte nach außen gerichtete Stollen aufweist. Die Führungsnasen 30 ragen in Führungskanäle 38, die in den Umfang des Haupttreibrades 22 sowie des Zusatztreibrades 24 eingelassen sind. Die sich beidseits der Führungsnasenreihe seitlich nach außen erstreckenden flachen Innenflächen 32 der Riemenlaufbahn 20 stehen mit umlaufenden Oberflächen, die durch Reibungseingriffselemente 50 des Haupttreibrades 22 gebildet werden, in Eingriff, um die Antriebskraft zu übertragen.

Das in den Figuren 2 bis 4 näher gezeigte Haupttreibrad 22 enthält ein rechtsseitiges Nabenteilstück 34 und ein linksseitiges Nabenteilstück 36, die miteinander verbunden sind und den umlaufenden Führungskanal 38 bilden. Jedes Nabenteilstück 34, 36 enthält einen inneren Ringflansch 40 und einen äußeren Ringflansch 42. Der jeweils innere Ringflansch 40 ist mit dem zugehörigen äußeren Ringflansch 42 durch radial ausgerichtete Verstärkungsteile 44 und auf dem Umfang verteilte Befestigungsplatten 46 verbunden.

Jede Befestigungsplatte 46 enthält zwei Befestigungsbohrungen, durch die Befestigungsbolzen 48 zur Befestigung der Reibungseingriffselemente 50 gesteckt werden können.

Die Reibungseingriffselemente 50 sind gehärtete Metallteile mit einer rauhen Struktur (Textur), die einen guten Reibungskontakt mit der Riemenlaufbahn 20 ermöglicht. Ein Material, das sich als geeignet herausgestellt hat, besteht aus sphärolithischem Gußeisen, in das Wolframkarbid eingebettet ist. Ein derartiges Material wurde durch die US-A-4,936,912 beschrieben.

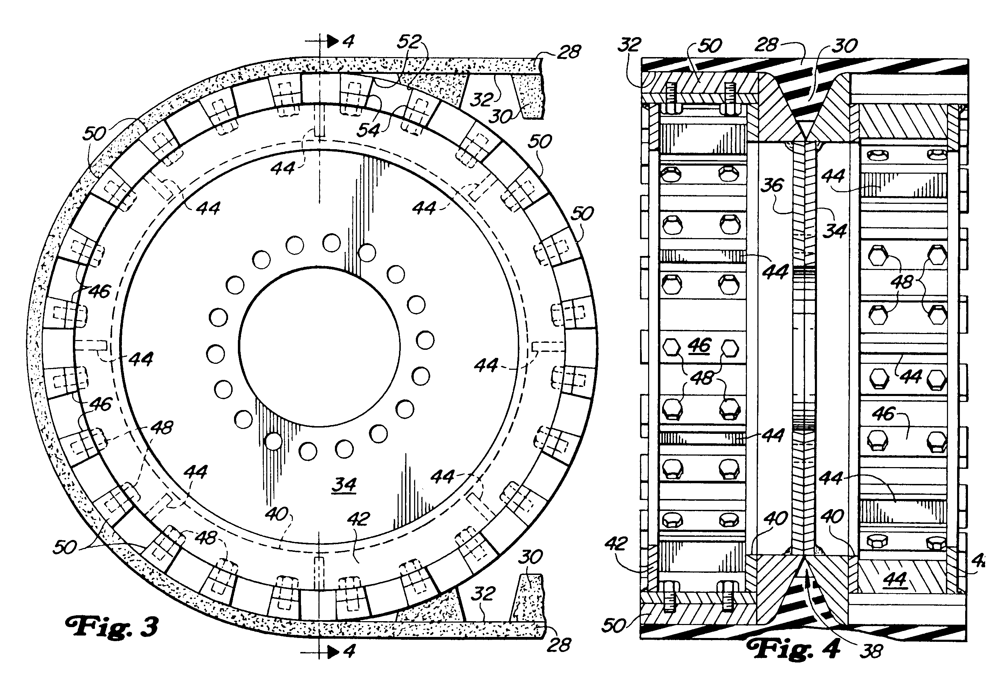

Wie aus Fig. 3 hervorgeht, sind die Seitenflächen der Reibungseingriffselemente 50 winklig ausgebildet, um die Neigung zu Schlammverdichtungen zwischen den Elementen 50 zu vermindern. Der Abstand zwischen den Außenkanten 52 benachbarter Reibungseingriffselemente 50 ist kleiner als der Abstand zwischen den Innenkanten 54 der gleichen Reibungseingriffselemente 50. Eine derartige Konfiguration vermindert die Wahrscheinlichkeit von Schlammverdichtungen zwischen den Elementen 50, da der freie Bereich zwischen benachbarten Elementen 50 sich von der äußeren Umfangsfläche des Rades radial nach innen, also in der Richtung, in die der Schlamm gedrückt wird, vergrößert.

## Patentansprüche

1. Antriebssystem eines Raupenfahrzeugs (10) mit wenigstens einer durch ein Treibrad (22) antreibbaren endlosen elastischen Riemenlaufbahn (20), bei dem die Riemenlaufbahn (20) wenigstens bereichsweise eine flache Innenfläche (32) aufweist, mit der sie mit einer im wesentlichen zylindrischen Umfangsfläche des Treibrades (22) in Eingriff steht, wobei die Umfangsfläche des Treibrades (22) sich im wesentlichen radial erstreckende, auf den Umfang verteilte zur Radachse hin offene Zwischenräume aufweist, durch die zwischen Treibrad (22) und Riemenlaufbahn (20) eingeschlossene Verunreinigungen herausfallen können, dadurch gekennzeichnet, daß die Umfangsfläche des Treibrades (22) durch eine Vielzahl im wesentlichen parallel zur Treibradachse ausgerichteter, zueinander beabstandeter und lösbar auf der Radnabe des Treibrades (22) befestigbarer Reibungseingriffselemente (50) gebildet wird, die mit der flachen Innenfläche (32) der Riemenlaufbahn (20) in Eingriff stehen und daß die radial äußeren Kanten (52) benachbarter Reibungseingriffselemente (50) einen geringeren Abstand zueinander haben als ihre radial inneren Kanten (54), so daß der Querschnitt der Zwischenräume von der Umfangsfläche aus radial nach innen zunimmt.

2. Antriebssystem nach Anspruch 1, dadurch gekennzeichnet, daß an der Radnabe des Treibrades (22) im wesentlichen parallel zur Treibradachse ausgerichtete, zueinander beabstandete Befestigungsplatten (46) angebracht sind, an denen die Reibungseingriffselemente (50) lösbar befestigt sind, und daß die Zwischenräume zwischen den Befestigungsplatten (46) mit denen zwischen den Reibungseingriffselementen (50) korrespondieren.

3. Antriebssystem nach Anspruch 2, dadurch gekennzeichnet, daß die radial äußeren Kanten benachbarter Befestigungsplatten (46) einen geringeren Abstand zueinander haben als ihre radial inneren Kanten.

4. Antriebssystem nach einem der Ansprüche 1 bis 3, dadurch gekennzeichnet, daß die Reibungseingriffselemente (50) und/oder die Befestigungsplatten (46) einen im wesentlichen keilförmigen Querschnitt aufweisen und ihre radial nach außen weisende Fläche breiter ist als ihre radial nach innen weisende Fläche.

5. Antriebssystem nach einem der Ansprüche 1 bis 4, dadurch gekennzeichnet, daß die Riemenlaufbahn (20) zur Zentrierung wenigstens eine in Längsrichtung ausgerichtete Reihe nach innen gerichteter Führungsnasen (30) aufweist, an die sich beidseits seitlich nach außen erstreckende flache Innenflächen (32) der Riemenlaufbahn (20) anschließen und die in einen in der Mitte der Umfangsfläche des Treibrades (22) umlaufenden Führungskanal (38) eingreifen.

6. Antriebssystem nach einem der Ansprüche 1 bis 5, dadurch gekennzeichnet, daß das Treibrad (22) eine Radnabe enthält, die aus einem linken Nabenteilstück (36) und einem rechten Nabenteilstück (34) besteht, die miteinander verbunden sind, und zwischen denen ein umlaufender Führungskanal (38) zur Aufnahme von Führungsnasen (30) der Riemenlaufbahn (20) ausgebildet ist.

7. Antriebssystem nach Anspruch 6, dadurch gekennzeichnet, daß das linke Nabenteilstück (36) und das rechte Nabenteilstück (34) je einen inneren Ringflansch (40) und einen äußeren Ringflansch (42) aufweisen, die durch eine Vielzahl in Umfangsrichtung zueinander beabstandeter, im wesentlichen parallel zur Treibradachse ausgerichteter Befestigungsplatten (46) miteinander verbunden sind.

8. Antriebssystem nach einem der Ansprüche 1 bis 7, dadurch gekennzeichnet, daß wenigstens die mit der Riemenlaufbahn (20) in Eingriff stehende Umfangsfläche des Treibrades (22) aus sphärolithischem Gußeisen mit eingelagertem Wolframkarbid besteht.

## Claims

1. A drive system in a tracked vehicle (10) with at least one endless, elastic belt track (20) drivable by a drive wheel (22), in which the belt track (20) has a flat inner surface (32) at least in a zone, with which it engages with a substantially cylindrical peripheral surface of the drive wheel (22), wherein the peripheral surface of the drive wheel (22) has gaps extending substantially radially, distributed over the periphery and open towards the wheel axis, through which gaps the impurities trapped between the drive wheel (22) and the belt track (20) can fall out, characterized in that the peripheral surface of the drive wheel (22) is formed by a plurality of frictional engagement elements (50) aligned substantially parallel to the drive wheel axis, spaced from one another and attachable releasably to the hub of the drive wheel (22), these elements being in engagement with the flat inner surface (32) of the belt track (20), and in that the radially outer edges (52) of adjacent frictional engagement elements (50) have a smaller spacing from each other than their radially inner edges (54), so that the cross-section of the gaps increases from the peripheral surface radially inwardly.

2. A drive system according to claim 1, characterized in that fixing plates (46) which are aligned substantially parallel to the drive wheel axis and are spaced from one another are fitted to the hub of the drive wheel (22), the frictional engagement elements (50) being releasably fixed thereto, and in that the gaps between the fixing plates (46) correspond to those between the frictional engagement elements (50).

3. A drive system according to claim 2, characterized in that the radially outer edges of adjacent fixing plates (46) have a smaller spacing from each other than their radially inner edges.

4. A drive system according to any of claims 1 to 3, characterized in that the frictional engagement elements (50) and/or the fixing plates (46) have a substantially wedge-shaped cross-section and their radially outwardly facing surface is wider than their radially inwardly facing surface.

5. A drive system according to any of claims 1 to 4, characterized in that the belt track (20) has at least one series of radially inwardly directed guide noses (30) aligned in the longitudinal direction, for centring the belt track, inner flat surfaces (32) of the belt track (20) adjoining the nose on its two sides and extending laterally outwards and the nose engaging in a guide channel (38) running round the middle of the peripheral surface of the drive wheel (22).

6. A drive system according to any of claims 1 to 5, characterized in that the drive wheel (22) has a hub which consists of a left hub part (36) and a right hub part (34) which are connected together and between which is formed a circumferential guide channel (38) for reception of guide noses (30) of the belt track (20).

7. A drive system according to claim 6, characterized in that the left hub part (36) and the right hub part (34) each have an inner annular flange (40) and an outer annular flange (42), which are connected together by a plurality of fixing plates (46) spaced from one another in the peripheral direction and aligned substantially parallel to the drive wheel axis.

8. A drive system according to any of claims 1 to 7, characterized in that at least the peripheral surface of the drive wheel (22) in engagement with the belt track (30) consists of nodular cast iron with embedded tungsten carbide.

## Revendications

1. Système d'entraînement d'un véhicule chenillé (10) comportant au moins une bande formant courroie élastique sans fin (20), qui peut être entraînée par une roue motrice (22), et dans lequel la bande formant courroie (20) possède au moins par endroits une surface intérieure plane (32), avec laquelle elle engrène avec une surface circonférentielle essentiellement cylindrique de la roue motrice (22), et dans lequel la surface circonférentielle de la roue motrice (22) comporte des espaces intercalaires qui s'étendent essentiellement radialement, sont répartis sur la périphérie et sont ouverts en direction de l'axe de la roue et à travers lesquels peuvent tomber des saletés insérées entre la roue motrice (20) et la bande formant courroie (20), caractérisé en ce que la surface circonférentielle de la roue motrice (22) est formée par une multiplicité d'éléments d'engrènement à friction (50), qui sont essentiellement parallèles à l'axe de la roue motrice, sont distants les uns des autres et peuvent être fixés de façon amovible sur le moyeu de la roue motrice (22) et qui engrènent avec la surface intérieure lisse (32) de la bande formant courroie (20), et que les bords (52), situés radialement à l'extérieur, d'éléments d'engrènement à friction (50) voisins sont séparés par une distance inférieure à celle séparant leurs bords (54) intérieurs du point de vue radial, de sorte que la section transversale des espaces intercalaires augmente radialement vers l'intérieur à partir de la surface circonférentielle.

2. Système d'entraînement selon la revendication 1, caractérisé en ce que sur le moyeu de la roue motrice (22) sont disposées des plaques de fixation (46), qui sont dirigées essentiellement parallèlement à l'axe de la roue motrice et sont réciproquement distantes et sur lesquelles sont fixées de façon amovible les éléments d'engrènement à friction (50), et que les espaces intercalaires entre les plaques de fixation (48) correspondent aux espaces intercalaires présents entre les éléments d'engrènement à friction (50).

3. Système d'entraînement selon la revendication 2, caractérisé en ce que les bords, extérieurs du point de vue radial, de plaques de fixation voisines (46) sont séparés les unes des autres par une distance inférieure à la distance séparant leurs bords intérieurs du point de vue radial.

4. Système d'entraînement selon l'une des revendications 1 à 3, caractérisé en ce que que les éléments d'engrènement à friction (50) et/ou les plaques de fixation (46) possèdent une section transversale essentiellement en forme de coin et que leur surface dirigée radialement vers l'extérieur est moins étroite que leur surface dirigée radialement vers l'intérieur.

5. Système d'entraînement selon l'une des revendications 1 à 4, caractérisé en ce que que la bande formant courroie (20) possède pour le centrage au moins une rangée, qui s'étend dans la direction longitudinale, de becs de guidage (30) dirigés vers l'intérieur et auxquels se raccordent les surfaces intérieures planes (32), qui s'étendent latéralement des deux côtés vers l'extérieur, de la bande formant courroie (30), et qui s'engage dans un canal de guidage (38), qui passe au centre de la surface circonférentielle de la roue motrice (22).

6. Système d'entraînement selon l'une des revendications 1 à 5, caractérisé en ce que que la roue motrice (22) contient un moyeu, qui est constitué par une partie de moyeu de gauche (36) et une partie de moyeu de droite (34), qui sont reliées entre elles, et entre lesquelles est formé un canal circonférentiel de guidage (38) servant à loger les becs de guidage (30) de la bande formant courroie (20).

7. Système d'entraînement selon la revendication 6, caractérisé en ce que la partie de moyeu de gauche (36) et la partie de moyeu de droite (34) possèdent chacune une bride annulaire intérieure (40) et une bride annulaire extérieure (52), qui sont reliées entre elles par une multiplicité de plaques de fixation (46), qui sont séparées les unes des autres dans la direction circonférentielle et sont essentiellement parallèles à l'axe de la roue motrice.

8. Système d'entraînement selon l'une des revendications 1 à 7, caractérisé en ce qu'au moins la surface circonférentielle, qui engrène avec la bande formant courroie (20), de la roue motrice (22) est constituée par de la fonte grise sphérolitique dans laquelle est inséré du carbure de tungstène.
